# EUROPÄISCHE PATENTSCHRIFT

(11) **EP 2 048 423 B1**
(45) Veröffentlichungstag und Bekanntmachung des Hinweises auf die Patenterteilung: **30.11.2011**
(21) Anmeldenummer: 07019668.8
(22) Anmeldetag: 08.10.2007
(51) Int. Cl.: F16L 23/032, F01D 25/24, F16M 1/04

(54) **Gehäuse für eine Turbomaschine und entsprechende Turbomaschine**
Casing for a turbomachine and corresponding turbomachine
Boîtier pour turbomachine et turbomachine associée

(43) Veröffentlichungstag der Anmeldung: 15.04.2009
(73) Patentinhaber: SIEMENS AKTIENGESELLSCHAFT, 80333 München (DE)
(72) Erfinder: Geisner, Jürgen, 47228 Duisburg (DE)

(56) Entgegenhaltungen:
- DE-B- 1 217 711
- US-A- 2 452 227

## Beschreibung

Die Erfindung betrifft ein Gehäuse für einen Turbomaschine und eine Turbomaschine mit dem Gehäuse gemäß dem Oberbegriff des Anspruchs 1.

Eine Turbomaschine, beispielsweise ein Turboverdichter, findet in einer Anlage der chemischen oder petrochemischen Industrie Anwendung. Der Turboverdichter weist mindestens einen Rotor und ein Gehäuse auf, das den Rotor umgibt. Zum Zusammenbau des Turboverdichters, insbesondere zur Montage des Rotors, ist das Gehäuse an einer Teilfuge teilbar ausgeführt. Bekannt ist das Gehäuse horizontal geteilt, das einfach in der Handhabung ist. Jedoch ist die Abdichtung der Teilfuge des horizontal geteilten Gehäuses kompliziert.

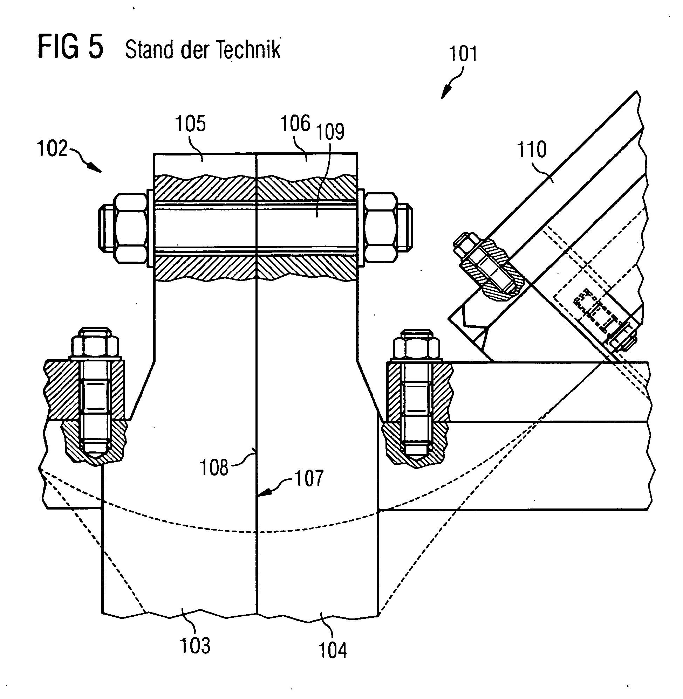

In Fig. 5 ist ein herkömmlicher Turboverdichter 101 mit einem Gehäuse 102 gezeigt. Das Gehäuse 102 weist ein erstes Gehäusesegment 103 und ein zweites Gehäusesegment 104 auf. Das erste Gehäusesegment 103 weist einen ersten Teilfugenflansch 105 und das zweite Gehäusesegment 104 weist einen zweiten Teilfugenflansch 106 auf. Die Teilfugenflansche 105 und 106 bilden eine Teilfuge 107, an der das Gehäuse 102 teilbar ist.

An der Teilfuge 107 sind der erste Teilfugenflansch 105 und der zweite Teilfugenflansch 106 aneinanderliegend angeordnet, so dass von den Teilfugenflanschen 105, 106 eine Teilfugenfläche 108 gebildet ist. Die Teilfugenflansche 105 und 106 sind mittels Teilfugenbolzen 109 miteinander befestigt, die durch entsprechende Löcher in den Teilfugenflanschen 105, 106 gesteckt sind. Die Teilfugenbolzen 109 sind im rechten Winkel zur Teilfugenfläche 108 angeordnet und weisen an ihren von den Teilfugenflanschen 105, 106 vorstehenden Enden ein Gewinde auf, an dem jeweils eine Mutter angeschraubt ist. Mit den Muttern sind die Teilfugenbolzen 109 an den Teilfugenflanschen 105, 106 derart verspannt, dass die Teilfuge 107 abgedichtet ist.

An dem Gehäuse 102 des Turboverdichters 101 ist ein Kühler 110 montiert. Der Kühler 110 ist benachbart zu dem zweiten Teilfugenflansch 106 angeordnet, so dass die an dem zweiten Teilfugenflansch 106 anliegende Mutter des Teilfugenbolzens 109 zur Montage/Demontage nur schwer zugänglich ist.

Aus der US 2,452,227 und der DE 1 217 711 sind jeweils Teilfugenverschraubungen mit geneigten Schrauben bekannt.

Aufgabe der Erfindung ist es, ein Gehäuse für eine Turbomaschine und eine Turbomaschine mit dem Gehäuse zu schaffen, wobei das Gehäuse einfach montierbar und/oder demontierbar ist.

Das erfindungsgemäße Gehäuse für eine Turbomaschine weist die Merkmale des Anspruchs 1 auf.

Die erfindungsgemäße Turbomaschine weist das Gehäuse auf.

Die Längsachsen der Teilfugenbolzen verlaufen nicht im rechten Winkel zu der Teilfugenfläche, sondern sind zu der Teilfugenfläche geneigt angeordnet. Dadurch sind die Teilfugenbolzen an einem Längsende weg von dem Gehäuse geschwenkt, so dass das Längsende zur Montage/Demontage des Teilfugenbolzens von Außen her zugänglich ist. Die gute Zugänglichkeit der Teilfugenbolzen ist auch dann gegeben, wenn an dem Gehäuse der Turbomaschine ein Zusatzaggregat, beispielsweise ein Kühler, angebaut ist. Ferner weist das Gehäuse ein Teilfugenzwischenstück auf, das an dem Außenrand der Teilfuge in der Teilfugenfläche liegend angeordnet ist, wobei das Teilfugenzwischenstück mit den ersten Teilfugenbolzen an dem zweiten Teilfugenflansch und mit den zweiten Teilfugenbolzen an dem ersten Teilfugenflansch befestigt ist.

Bevorzugt sind die ersten Teilfugenbolzen jeweils durch in dem ersten Teilfugenflansch vorgesehene erste Löcher gesteckt und in dem zweiten Teilfugenflansch befestigt und die zweiten Teilfugenbolzen jeweils durch in dem zweiten Teilfugenflansch vorgesehene zweite Löcher gesteckt und in dem ersten Teilfugenflansch befestigt.

Dadurch wird der zweite Teilfugenflansch von den ersten Teilfugenbolzen an dem ersten Teilfugenflansch befestigt und der zweite Teilfugenflansch wird von den ersten Teilfugenbolzen an dem ersten Teilfugenflansch befestigt. Somit sind die ersten Teilfugenbolzen gegen die zweiten Teilfugenbolzen geneigt angeordnet, so dass die Verspannung der Teilfugenflansche durch die Teilfugenbolzen ausgeglichen ist.

Das Teilfugenzwischenstück ist in die Teilfuge eingesetzt, so dass der erste Teilfugenflansch via dem zweiten Teilfugenbolzen, dem Teilfugenzwischenstück und dem ersten Teilfugenbolzen an den zweiten Teilfugenflansch gekoppelt ist. Dadurch ist eine Befestigung zwischen dem ersten Teilfugenflansch und dem zweiten Teilfugenflansch ermöglicht, wobei die Montage mittels des Teilfugenzwischenstücks einfach bewerkstelligbar ist.

Bevorzugt ist es, dass der erste Teilfugenflansch und der zweite Teilfugenflansch zusammenwirkend eine Aussparung ausbilden, in die das Teilfugenzwischenstück derart eingepasst ist, dass der erste Teilfugenflansch mit dem zweiten Teilfugenflansch via dem Teilfugenzwischenstück durch die Teilfugenbolzen verspannt ist.
Dadurch wird vorteilhaft erreicht, dass an dem Teilfugenzwischenstück die Teilfuge gut abgedichtet einrichtbar ist.

Ferner ist es bevorzugt, dass die ersten Teilfugenbolzen jeweils durch in dem Teilfugenzwischenstück vorgesehene erste Löcher gesteckt und in dem zweiten Teilfugenflansch befestigt und die zweiten Teilfugenbolzen jeweils mit in dem Teilfugenzwischenstück vorgesehene zweite Löcher gesteckt und in dem ersten Teilfugenflansch befestigt sind.

Dadurch ist von den zweiten Teilfugenbolzen das Teilfugenzwischenstück an dem ersten Teilfugenflansch befestigt und von den ersten Teilfugenbolzen das Teilfugenzwischenstück an dem zweiten Teilfugenflansch befestigt. Somit ist die Befestigung der beiden Teilfugenflansche mittels der ersten und der zweiten Teilfugenbolzen und des Teilfugenzwischenstücks ausgeglichen und nicht verspannt. Dadurch sind an den Teilfugenflanschen Verwerfungen unterbunden, die zu Undichtigkeiten der Teilfuge führen können.

Bevorzugt sind die ersten Teilfugenbolzen und die zweiten Teilfugenbolzen zueinander versetzt und gekreuzt und sich abwechselnd in einer Reihe an dem Außenrand der Teilfuge angeordnet.

Dadurch ist eine gleichmäßige Verteilung der ersten Teilfugenbolzen und der zweiten Teilfugenbolzen am Außenrand der Teilfuge erreicht, wodurch die Verspannung der Teilfugenflansche durch die Teilfugenbolzen gleichmäßig ist.

Bevorzugt ist es, dass die ersten Teilfugenbolzen und die zweiten Teilfugenbolzen im rechten Winkel zueinander angeordnet sind und die ersten Teilfugenbolzen symmetrisch bezüglich der Teilfugenfläche zu den zweiten Teilfugenbolzen angeordnet sind.

Dadurch ist der Krafteintrag der Teilfugenbolzen in den jeweiligen Teilfugenflansch ideal, so dass Spannungsspitzen in den Teilfugenflanschen unterbunden sind.

Bevorzugt ist es, dass das Teilfugenzwischenstück in dem Querschnitt senkrecht zur Teilfugenfläche und zum Außenrand der Teilfuge quadratisch und die Aussparung als eine zur Teilfugenfläche symmetrisch angeordnete, V-förmige Nut ausgebildet ist, die von einer ersten Flanke des ersten Teilfugenflansches und einer zweiten Flanke des zweiten Teilfugenflansches gebildet ist, wobei die erste Flanke und die zweite Flanke im rechten Winkel zueinander stehen und an zwei benachbarte Seiten des Teilfugenzwischenstücks angepasst sind.

Ferner ist es bevorzugt, dass die ersten Teilfugenbolzen jeweils in dem zweiten Teilfugenflansch mittels einer zweiten Schraubenverbindung und die zweiten Teilfugenbolzen jeweils in dem ersten Teilfugenflansch mittels einer ersten Schraubenverbindung verschraubt sind.

Dadurch sind die Teilfugenbolzen durch die jeweiligen Löcher in dem Teilfugenzwischenstück gesteckt, wobei die Teilfugenbolzen in das Material des ihnen zugeordneten Teilfugenflansches eingreifen.

Bevorzugt ist die Turbomaschine ein Turboverdichter.

Im Folgenden werden bevorzugte Ausführungsbeispiele eines erfindungsgemäßen Gehäuses anhand der beigefügten schematischen Zeichnungen erläutert.

Es zeigt:
- Fig. 1: einen Querschnittsausschnitt eines Turboverdichtergehäuses (ähnlich DE 1 217 711),
- Fig. 2: einen Querschnittsausschnitt eines Ausfüh- rungsbeispiels des erfindungsgemäßen Turboverdich- tergehäuses,
- Fig. 3: einen Ausschnitt einer perspektivischen Explosions- darstellung eines Ausführungsbeispiels des erfindungsgemäßen Turboverdichtergehäuses,
- Fig. 4: eine perspektivische Ansicht eines Teilfugenzwi- schenstücks und
- Fig. 5: einen Ausschnittsquerschnitt eines herkömmlichen Turboverdichtergehäuses.

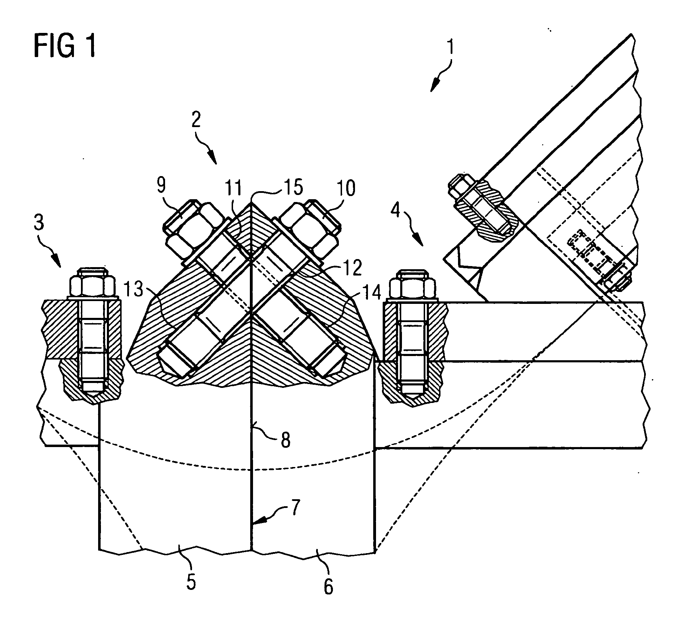

Wie es aus Fig. 1 ersichtlich ist, weist ein erstes Ausführungsbeispiel (ähnlich DE 1 217 711) eines Turboverdichters 1 ein Gehäuse 2 auf. Das Gehäuse 2 weist ein erstes Gehäusesegment 3 und ein zweites Gehäusesegment 4 auf, die zusammenmontiert das Gehäuse 2 bilden. An dem ersten Gehäusesegment 3 ist ein erster Teilfugenflansch 5 und an dem zweiten Gehäusesegment 4 ist ein zweiter Teilfugenflansch 6 vorgesehen, wobei die Teilfugenflansche 5, 6 unter Ausbildung einer Teilfuge 7 aneinanderliegend angeordnet sind. An der Teilfuge 7 ist als eine Berührfläche des ersten Teilfugenflansches mit dem zweiten Teilfugenflansch 6 eine Teilfugenfläche 8 gebildet.

Die Teilfugenflansche 5, 6 sind von ersten Teilfugenbolzen 9 und zweiten Teilfugenbolzen 10 miteinander verbunden. Die ersten Teilfugenbolzen 9 sind in ihnen zugeordneten ersten Löchern 11 gesteckt, die in dem ersten Teilfugenflansch 5 ausgebildet sind. In dem zweiten Teilfugenflansch 6 sind zweite Schraubenverbindungen 14 vorgesehen, mit denen die ersten Teilfugenbolzen 9 in dem zweiten Teilfugenflansch 5 befestigt sind. In analoger Weise sind die zweiten Teilfugenbolzen 10 durch in dem zweiten Teilfugenflansch 6 ausgebildete Löcher 12 gesteckt und mittels ersten Schraubenverbindungen 13 in dem ersten Teilfugenflansch 5 befestigt.

Die ersten Teilfugenbolzen 5 und die zweiten Teilfugenbolzen 6 sind geneigt zu der Teilfugenfläche 8 im Winkel von 45° angeordnet, wobei die Teilfugenbolzen 9, 10 von dem Gehäuse 2 weggeschwenkt sind. Die Teilfugenbolzen 5, 6 sind im rechten Winkel zueinander angeordnet, so dass die Teilfugenbolzen 5, 6 symmetrisch zu der Teilfugenfläche 8 angeordnet sind.

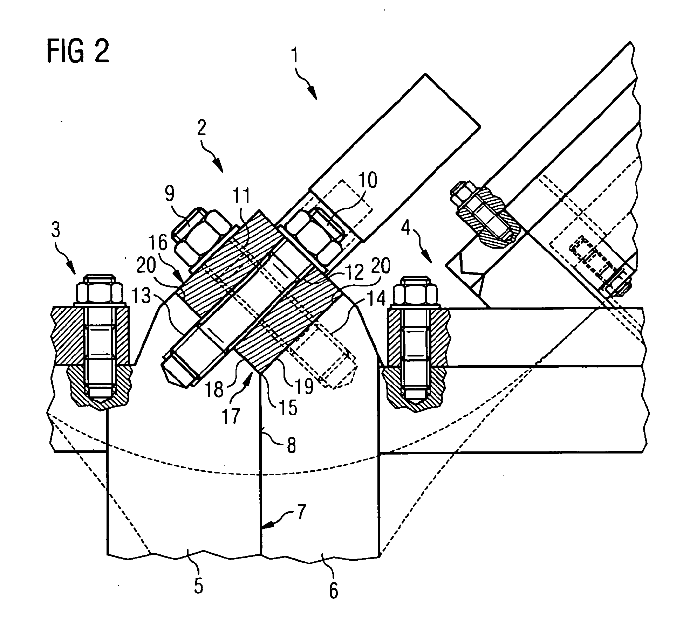

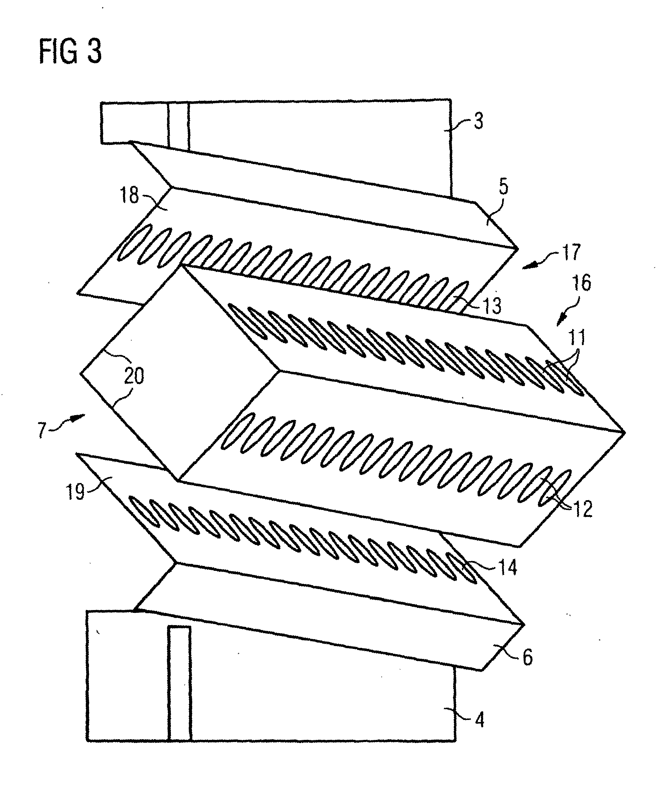

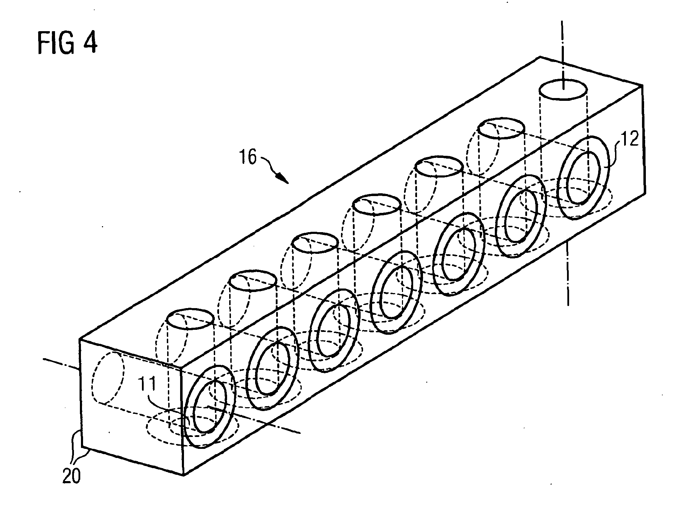

In Figuren 2 bis 4 ist ein Ausführungsbeispiel des erfindungsgemäßen Turboverdichters 1 gezeigt. Der Aufbau des Turboverdichters 1 gemäß dem ersten Ausführungsbeispiel verglichen mit dem Ausführungsbeispiel unterscheidet sich darin, dass an dem an der Teilfuge 7 ausgebildeten Teilfugenaußenrand 15 ein Teilfugenzwischenstück 16 vorgesehen ist.

Das Teilfugenzwischenstück 16 ist in dem in Figur 2 gezeigten Querschnitt quadratisch ausgebildet und in einer Aussparung 17 eingesetzt, die an dem Teilfugenaußenrand 15 ausgebildet ist.

Die Aussparung 17 ist von einer ersten Flanke 18 gebildet, die als eine flache Abplattung an dem ersten Teilfugenflansch ausgebildet ist. Die erste Flanke 18 ist gegen die Teilfugenfläche 8 um 45° geneigt. Symmetrisch zur ersten Flanke 18 und der Teilfugenfläche 8 ist an dem zweiten Teilfugenflansch 6 eine ebenfalls die Aussparung 17 bildende zweite Flanke 19 ausgebildet. Dadurch ist die Aussparung 17 von der ersten Flanke 18 und der zweiten Flanke 19 V-förmig ausgebildet, wobei die Aussparung 17 an dem Teilfugenaußenrand 15 einen Winkel von 90° aufweist.

Das Teilfugenzwischenstück 16 weist zwei miteinander benachbarte Seiten 20 auf, die an der ersten Flanke 18 bzw. an der zweiten Flanke 19 anliegend angeordnet sind. Dadurch ist das Teilfugenzwischenstück 16 mit seinen benachbarten Seiten 20 formschlüssig in die Aussparung 17 eingesetzt.

In dem Teilfugenzwischenstück 16 sind die ersten Löcher 11 und die zweiten Löcher 12 vorgesehen, wobei die ersten Löcher 11 im Winkel von 90° zu den zweiten Löchern 12 angeordnet sind. Ferner sind die ersten Löcher 11 zu der Teilfugenfläche 8 im Winkel von 45° und die zweiten Löcher 12 zu der Teilfugenfläche ebenfalls im Winkel von 45° angeordnet.

Durch die ersten Löcher 11 sind die ersten Teilfugenbolzen 9 gesteckt, die mittels den zweiten Schraubenverbindungen 14 in dem zweiten Teilfugenflansch 6 befestigt sind. Ferner sind die zweiten Teilfugenbolzen 10 durch die zweiten Löcher 12 gesteckt und mit den ersten Schraubenverbindungen 13 in dem ersten Teilfugenflansch 5 befestigt.

Die ersten Löcher 11 und die zweiten Löcher 12 sind in einer Reihe hintereinander liegend sich abwechselnd und sich kreuzend in dem Teilfugenzwischenstück 16 angeordnet. Die Teilfugenbolzen 9 und 10 sind an ihren Außenseiten jeweils mit einer Mutter an dem Teilfugenzwischenstück 16 verspannt.

Mittels den Teilfugenbolzen 9 und 10 ist das Teilfugenzwischenstück 16 in die Aussparung 17 eingepresst, wobei die benachbarten Seiten 20 auf die erste Flanke 18 bzw. die zweite Flanke 19 flächig aufgedrückt sind.

Der erste Teilfugenflansch 5 ist via den Teilfugenbolzen 10, dem Teilfugenzwischenstück 16, den ersten Teilfugenbolzen 9 mit dem zweiten Teilfugenflansch 6 verspannt. Dadurch ist die Teilfuge 7 an der Teilfugenfläche 8 abgedichtet.

Sowohl die ersten Teilfugenbolzen 9 als auch die zweiten Teilfugenbolzen 10 sind von dem Gehäuse 2 weggeneigt angeordnet, so dass die freiliegenden Enden und die daran befestigten Muttern der Teilfugenbolzen 8, 9 von außen gut zugänglich sind.

In Fig. 2 ist als eine Hülse an dem zweiten Teilfugenbolzen 10 ein Werkzeug angedeutet, das mit dem zweiten Teilfugenbolzen 10 in Eingriff steht. Dadurch, dass der Teilfugenbolzen 10 von dem Gehäuse 2 weggeneigt ist, steht die Hülse von dem Gehäuse 2 vor. Somit ist die Hülse von außen gut zugänglich, wodurch das Handhaben der Hülse, beispielsweise zum Montieren oder Demontieren des Teilfugenbolzens 10, gut bewerkstelligbar ist.

## Patentansprüche

1. Gehäuse für eine Turbomaschine (1),
aufweisend mindestens ein erstes Gehäusesegment (2) mit einem ersten Teilfugenflansch (5) mit dazugehörigen ersten Teilfugenbolzen und ein zweites Gehäusesegment (4) mit einem zweiten Teilfugenflansch (6) mit dazugehörigen zweiten Teilfugenbolzen (10),
wobei das erste und das zweite Gehäusesegment (3, 4) an ihren Teilfugenflanschen (5, 6) eine Teilfuge (7) bildend mit den Teilfugenbolzen (9, 10) zusammengebaut sind, die gegen die Teilfugenfläche (8) der Teilfuge (7) geneigt angeordnet sind,
so dass die Teilfugenbolzen (9, 10) für ihre Montage und/oder Demontage von außerhalb des Gehäuses (2) frei zugänglich sind,
**dadurch gekennzeichnet,**
**dass** das Gehäuse(2) ein Teilfugenzwischenstück (16) aufweist, das an dem Außenrand (15) der Teilfuge (7) in der Teilfugenfläche (8) liegend angeordnet ist,
wobei das Teilfugenzwischenstück (16) mit den ersten Teilfugenbolzen (9) an dem zweiten Teilfugenflansch (6) und mit den zweiten Teilfugenbolzen (10) an dem ersten Teilfugenflansch (5) befestigt ist.

2. Gehäuse gemäß Anspruch 1,
wobei die ersten Teilfugenbolzen (9) jeweils durch in dem ersten Teilfugenflansch (5) vorgesehene erste Löcher (11) gesteckt und in dem zweiten Teilfugenflansch (6) befestigt und die zweiten Teilfugenbolzen (10) jeweils durch in dem zweiten Teilfugenflansch (6) vorgesehene zweite Löcher (12) gesteckt und in dem ersten Teilfugenflansch (5) befestigt sind.

3. Gehäuse gemäß Anspruch 1,
wobei der erste Teilfugenflansch (5) und der zweite Teilfugenflansch (6) zusammenwirkend eine Aussparung (17) ausbilden, in die das Teilfugenzwischenstück (16) derart eingepasst ist, dass der erste Teilfugenflansch (5) mit dem zweiten Teilfugenflansch (6) via den Teilfugenzwischenstück (16) durch die Teilfugenbolzen (9, 10) verspannt ist.

4. Gehäuse gemäß Anspruch 3,
wobei die ersten Teilfugenbolzen (9, 10) jeweils durch in dem Teilfugenzwischenstück (16) vorgesehene erste. Löcher (11) gesteckt und in dem zweiten Teilfugenflansch (6) befestigt und die zweiten Teilfugenbolzen (10) jeweils durch in dem Teilfugenzwischenstück (16) vorgesehene zweite Löcher (12) gesteckt und in dem ersten Teilfugenflansch (5) befestigt sind.

5. Gehäuse gemäß Anspruch 4,
wobei die ersten Teilfugenbolzen (9) und die zweiten Teilfugenbolzen (10) zueinander versetzt und gekreuzt sich abwechselnd in einer Reihe an dem Außenrand (15) der Teilfuge (7) angeordnet sind.

6. Gehäuse gemäß Anspruch 5,
wobei die ersten Teilfugenbolzen (9) und die zweiten Teilfugenbolzen (10) im rechten Winkel zueinander angeordnet sind und die ersten Teilfugenbolzen (9) symmetrisch bezüglich der Teilfugenfläche (8) zu den zweiten Teilfugenbolzen (10) angeordnet sind.

7. Gehäuse gemäß Anspruch 6,
wobei das Teilfugenzwischenstück (16) in dem Querschnitt senkrecht zur Teilfugenfläche (9) und zum Außenrand (15) der Teilfuge (7) quadratisch und die Aussparung (17) als eine zur Teilfugenfläche (8) symmetrisch angeordnete, V-förmige Nut ausgebildet ist, die von einer ersten Flanke (18) des ersten Teilfugenflansches (5) und einer zweiten Flanke (19) des zweiten Teilfugenflansches (6) gebildet ist,
wobei die erste Flanke (18) und die zweite Flanke (19) im rechten Winkel zueinander stehend und an zwei benachbarte Seiten (20) des Teilfugenzwischenstücks (16) angepasst sind.

8. Gehäuse gemäß Anspruch 7,
wobei die ersten Teilfugenbolzen (9) senkrecht zu der ersten Flanke (18) und die zweiten Teilfugenbolzen (10) senkrecht zu der zweiten Flanke (19) angeordnet sind.

9. Gehäuse gemäß einem der Ansprüche 1 bis 8,
wobei die ersten Teilfugenbolzen (9) jeweils in dem zweiten Teilfugenflansch (6) mittels einer zweiten Schraubenverbindung (14) und die zweiten Teilfugenbolzen (10) jeweils in dem ersten Teilfugenflansch (5) mittels einer ersten Schraubenverbindung (13) verschraubt sind.

10. Turbomaschine mit einem Gehäuse (2) gemäß einem der Ansprüche 1 bis 9.

11. Turbomaschine gemäß Anspruch 10,
wobei die Turbomaschine ein Turboverdichter (1) ist.

## Claims

1. Casing for a turbomachine (1), comprising at least a first casing segment (3) having a first casing joint flange (5) with associated first casing joint bolts and a second casing segment (4) having a second casing joint flange (6) with associated second casing joint bolts (10), wherein the first and the second casing segments (3, 4) are assembled at their casing joint flanges (5, 6) with the casing joint bolts (9, 10) so as to form a casing joint (7), the casing joint bolts being arranged at an inclination with respect to the casing joint surface (8) of the casing joint (7), with the result that the casing joint bolts (9, 10) are freely accessible from outside the casing (2) for their assembly and/or disassembly, **characterized in that** the casing (2) comprises a casing joint intermediate piece (16) which is arranged horizontally on the outer edge (15) of the casing joint (7) in the casing joint surface (8), wherein the casing joint intermediate piece (16) is fastened by the first casing joint bolt (9) to the second casing joint flange (6) and by the second casing joint bolt (10) to the first casing joint flange (5).

2. Casing according to Claim 1, wherein the first casing joint bolts (9) are in each case plugged through first holes (11) provided in the first casing joint flange (5) and are fastened in the second casing joint flange (6), and the second casing joint bolts (10) are in each case plugged through second holes (12) provided in the second casing joint flange (6) and are fastened in the first casing joint flange (5).

3. Casing according to Claim 1, wherein the first casing joint flange (5) and the second casing joint flange (6) form in conjunction a recess (17) into which the casing joint intermediate piece (16) is fitted in such a way that the first casing joint flange (5) is braced with the second casing joint flange (6) by the casing joint bolts (9, 10) via the casing joint intermediate piece (16).

4. Casing according to Claim 3, wherein the first casing joint bolts (9, 10) are in each case plugged through first holes (11) provided in the casing joint intermediate piece (16) and are fastened in the second casing joint flange (6), and the second casing joint bolts (10) are in each case plugged through second holes (12) provided in the casing joint intermediate piece (16) and are fastened in the first casing joint flange (5).

5. Casing according to Claim 4, wherein the first casing joint bolts (9) and the second casing joint bolts (10) are arranged in a row on the outer edge (15) of the casing joint (7) while being offset with respect to one another and crossing one another in an alternating manner.

6. Casing according to Claim 5, wherein the first casing joint bolts (9) and the second casing joint bolts (10) are arranged at a right angle to one another and the first casing joint bolts (9) are arranged symmetrically, with respect to the casing joint surface (8), to the second casing joint bolts (10).

7. Casing according to Claim 6, wherein the casing joint intermediate piece (16) is designed to be square in cross section perpendicular to the casing joint surface (8) and to the outer edge (15) of the casing joint (7) and the recess (17) is designed as a V-shaped groove which is arranged symmetrically to the casing joint surface (8) and which is formed by a first flank (18) of the first casing joint flange (5) and a second flank (19) of the second casing joint flange (6), wherein the first flank (18) and the second flank (19) are at a right angle to one another and are adapted to two adjacent sides (20) of the casing joint intermediate piece (16).

8. Casing according to Claim 7, wherein the first casing joint bolts (9) are arranged perpendicular to the first flank (18) and the second casing joint bolts (10) are arranged perpendicular to the second flank (19).

9. Casing according to one of Claims 1 to 8, wherein the first casing joint bolts (9) are in each case screwed in the second casing joint flange (6) by means of a second screw connection (14) and the second casing joint bolts (10) are in each case screwed in the first casing joint flange (5) by means of a first screw connection (13).

10. Turbomachine having a casing (2) according to one of Claims 1 to 9.

11. Turbomachine according to Claim 10, wherein the turbomachine is a turbocompressor (1).

## Revendications

1. Carter pour une turbomachine ( 1 ),
comportant au moins un premier segment ( 2 ) de carter, comprenant un premier flasque ( 5 ) de joint partiel, ayant des premiers boulons de joint partiel qui en font partie, et un deuxième segment ( 4 ) de carter, comprenant un deuxième flasque ( 6 ) de joint partiel, ayant des deuxièmes boulons ( 10 ) de joint partiel qui en font partie,
dans lequel le premier et le deuxième segments ( 3, 4 ) de carter sont rassemblés sur leur carter ( 5, 6) de joint partiel par les boulons ( 9, 10 ) de joint partiel en formant un joint ( 7 ) partiel, les boulons ( 9, 10 ) étant disposés de manière inclinée par rapport à la surface ( 8 ) du joint ( 7 ) partiel,
de sorte que les boulons (9, 10) de joint partiel sont accessibles librement de l'extérieur du carter ( 2 ) pour leur montage et/ou pour leur démontage,
**caractérisé**
**en ce que** le carter ( 2 ) comporte une pièce ( 16 ) intermédiaire de joint partiel, qui est disposée sur le bord ( 15 ) extérieur du joint ( 7 ) partiel en s'appliquant à la surface ( 8 ) du joint partiel,
dans lequel la pièce ( 16 ) intermédiaire du joint partiel est fixée par les premiers boulons ( 9 ) de joint partiel au deuxième flasque ( 6 ) de joint partiel et par les deuxièmes boulons ( 10 ) de joint partiel au premier flasque ( 5 ) de joint partiel.

2. Carter suivant la revendication 1,
dans lequel les premiers boulons ( 9 ) de joint partiel sont enfilés respectivement dans des premiers trous ( 11 ) prévus dans le premier flasque ( 5 ) de joint partiel et sont fixés dans le deuxième flasque ( 6 ) de joint partiel et les deuxièmes boulons ( 10 ) de joint partiel sont enfilés respectivement dans des deuxièmes trous ( 12 ) prévus dans le deuxième flasque ( 6 ) de joint partiel et sont fixés dans le premier flasque ( 5) de joint partiel.

3. Carter suivant la revendication 1,
dans lequel le premier flasque ( 5 ) de joint partiel et le deuxième flasque ( 6 ) de joint partiel forment en coopération un évidement ( 17 ), dans lequel la pièce ( 16 ) intermédiaire de joint partiel est adaptée, de manière à ce que le premier flasque ( 5 ) de joint partiel soit bloqué avec le deuxième flasque de joint partiel par les boulons ( 9, 10 ) de joint partiel par l'intermédiaire de la pièce ( 16 ) intermédiaire de joint partiel.

4. Carter suivant la revendication 3,
dans lequel les premiers boulons ( 9, 10 ) de joint partiel sont enfilés respectivement dans les premiers trous ( 11 ) prévus dans la pièce ( 16 ) intermédiaire de joint partiel et sont fixés dans le deuxième flasque ( 6 ) de joint partiel et les deuxièmes boulons ( 10 ) de joint partiel sont enfilés respectivement dans des deuxièmes trous ( 12 ) prévus dans la pièce ( 16 ) intermédiaire de joint partiel et sont fixés dans le premier flasque ( 5 ) de joint partiel.

5. Carter suivant la revendication 4,
dans lequel les premiers boulons ( 9 ) de joint partiel et les deuxièmes boulons ( 10 ) de joint partiel sont décalés les uns par rapport aux autres et sont disposés de manière croisée en alternance suivant une rangée sur le bord ( 15 ) extérieur du joint ( 7 ) partiel.

6. Carter suivant la revendication 5,
dans lequel les premiers boulons ( 9 ) de joint partiel et les deuxièmes boulons ( 10 ) de joint partiel sont disposés à angle droit les uns par rapport aux autres et les premiers boulons ( 9 ) de joint partiel sont disposés de manière symétrique aux deuxièmes boulons ( 10 ) de joint partiel par rapport à la surface ( 8 ) de joint partiel.

7. Carter suivant la revendication 6,
dans lequel la pièce ( 16 ) intermédiaire de joint partiel est, dans la section transversale perpendiculairement à la surface ( 9 ) de joint partiel et au bord ( 15 ) du joint ( 7 ) partiel, carrée et l'évidement ( 17 ) est constitué sous la forme d'une rainure en forme de V disposé symétriquement par rapport à la surface ( 8 ) de joint partiel, rainure qui est formée par un premier flanc ( 18 ) du premier flasque ( 5 ) de joint partiel et par un deuxième flanc ( 19 ) du deuxième flasque ( 7 ) de joint partiel,
le premier flanc ( 18 ) et le deuxième flanc ( 19 ) étant à angle droit l'un par rapport à l'autre et étant adaptés à deux faces ( 20 ) voisines de la pièce ( 16 ) intermédiaire de joint partiel.

8. Carter suivant la revendication 7,
dans lequel les premiers boulons ( 9 ) de joint partiel sont disposés perpendiculairement au premier flanc ( 18 ) et les deuxièmes boulons ( 10 ) de joint partiel sont disposés perpendiculairement au deuxième flanc ( 19 ).

9. Carter suivant l'une des revendications 1 à 8,
dans lequel les premiers boulons ( 9 ) de joint partiel sont vissés respectivement dans le deuxième flasque ( 6 ) de joint partiel au moyen d'un deuxième vissage ( 14 ) et les deuxièmes boulons ( 10 ) de joint partiel sont vissés respectivement dans le premier flasque ( 5 ) de joint partiel au moyen d'un premier vissage ( 13 ).

10. Turbomachine comprenant un carter ( 2 ) suivant l'une des revendications 1 à 9.

11. Turbomachine suivant la revendication 10,
dans laquelle la turbomachine est un turbocompresseur ( 1 ).
